Europäisches Patentamt

**European Patent Office**

Office européen des brevets

(11) Publication number: **0 059 604**
**A1**

(12) **EUROPEAN PATENT APPLICATION**

(21) Application number: **82300962.6**

(22) Date of filing: **25.02.82**

(51) Int. Cl.³: **A 45 F 1/06**
**B 60 P 3/34**

(30) Priority: **25.02.81 GB 8105937**

(43) Date of publication of application:
**08.09.82 Bulletin 82/36**

(84) Designated Contracting States:
**AT BE CH DE FR IT LI LU NL SE**

(71) Applicant: **Steele, Anthony**
**29 Bar Terrace**
**Falmouth Cornwall(GB)**

(72) Inventor: **Steele, Anthony**
**29 Bar Terrace**
**Falmouth, Cornwall(GB)**

(72) Inventor: **Atkinson, Donald**
**Wasdale Cot Hill**
**Ponsanooth Truro, Cornwall(GB)**

(74) Representative: **Bryer, Kenneth Robert**
***Coosehecca Chacewater***
**Truro TR4 8QU Cornwall(GB)**

(54) A tent frame assembly.

(57) A tent frame assembly in which a fixed panel structure forms part of the roof of the tent frame and supports the remainder of the tent frame when collapsed so as to enable it to be carried as a roof rack on the roof of a motor vehicle. The roof of the tent frame assembly is constituted by the fixed frame (11), a telescopically extendable ridge pole (12), telescopically extendable transverse support struts (13, 14, 15, 16) and telescopically extendable or dismantlable eaves poles (18, 19) which, together with secondary transverse struts (27, 28) at the free end of the telescopic extension of the ridge pole (12) constitutes a telescopically collapsible or foldable roof structure supported by frame legs at the corners and at the mid points of the sides of the roof frame, which legs can be folded up into the fixed frame (11) when the tent frame assembly is collapsed.

FIG. 7

EP 0 059 604 A1

- 1 -

## A Tent Frame Assembly

### Technical Field

The present invention relates to a tent frame assembly and particularly to a tent frame assembly specifically adapted for use in association with a motor vehicle.

### Background Art

Conventionally, modern tent frames are structures comprising a plurality of straight poles joined by socket-like junction elements to form a support which is sufficiently rigid for the canvas cover of the tent. The frame itself is not of very great strength, but when the downward load of a tent cover, reinforced by the tension applied via guy ropes and pegs around the lower edge of the cover, is applied it is fully strong enough to withstand the buffeting experienced during even the most inclement weather providing it has been properly erected. When dismantled the individual straight poles are usually housed in a generally tubular container separate from the tent cover, and frequently there is further provided an inner tent or tent liner of light cotton secured at its periphery to a waterproof, frequently plastics, groundsheet. This is generally housed in a separate bag from that containing the cover so that the tent, when dismantled, is fitted into three separate containers. In addition there may be a further container for tent pegs, spare guy ropes, mallet, etc. This proliferation of separate elements is a substantial disadvantage when travelling from one camp sight to another on a camping holiday and the tent, particularly if it is of a substantial size, accounts for a large proportion of the available space in the vehicle being used for its transport.

In many cases, particularly when the vehicle used for transport is an ordinary saloon car, extra space has to be made available by the use of a roof rack since there is insufficient space in the motor vehicle's boot to accommodate all the occupant's luggage as well as the tent components. Known roof racks are frequently made of tubular elements although of a rather smaller gauge than that used for the tent frame, and the present invention items from the realisation that economies in space can be achieved by making a part of the tent frame serve a dual function.

Disclosure of the invention

According to one aspect of the present invention, therefore, there is provided a tent frame assembly of elongate frame elements interconnected in a way which permits the frame to be converted between an erected condition and a collapsed or dismantled condition, characterised in that the assembly comprises a fixed frame part and means for mounting the fixed frame part to the roof of a motor vehicle in the manner of a roof rack to provide support for the remaining frame elements of the assembly in its collapsed or dismantled condition.

Preferably the fixed frame part includes a plurality of struts rigidly secured together to form two generally flat sub-frame panels inclined at a predetermined angle to one another. Likewise, it is preferred that the said two sub-frame panels each incorporate a common longitudinal element which constitutes the ridge pole in the erected tent frame.

The roof frame elements may be releasable from one another to effect partial dismantling and folding to collapse the tent frame assembly, although in the presently preferred embodiment all of the components constituting the roof frame are telescopically slidable
between a collapsed and an erected condition. The legs
of the tent frame are also preferably telescopic.

Some or all of the telescopic members may be provided
with friction clamps operable to retain the member in
any position to which it is adjusted thereby permitting
infinite adjustment between two end points determined
by the maximum retraction of the inner telescopic mem-
ber into its associated outer tube, and at the other
end by a suitable catch provided to prevent total separation of the two telescopic elements.

Brief Description of the Drawings

Two embodiments of the present invention will now be
more particularly described, by way of example, with
reference to the accompanying drawings, in which:

Figure 1 is a perspective view of a first embodiment of
the tent frame of the present invention showing the
frame in its erected state;

Figure 2 is a perspective view similar to that of Figure 1, showing the tent frame partly collapsed;

Figure 3 is a perspective view similar to that of Figure 1, showing the tent frame completely collapsed;

Figure 4 is a side view of a detail of the tent frame
illustrated in Figure 1;

Figure 5 is a side view of a further detail of the
tent frame construction illustrated in Figure 1;

Figure 6 is a side view of an attachment clip forming part of the embodiment of Figure 1;

Figure 7 is a perspective view of a second embodiment of the invention in its erected state;

Figure 8 is a perspective view showing the frame of Figure 7 partly collapsed; and

Figure 9 is a perspective view showing the frame of Figure 7 fully collapsed.

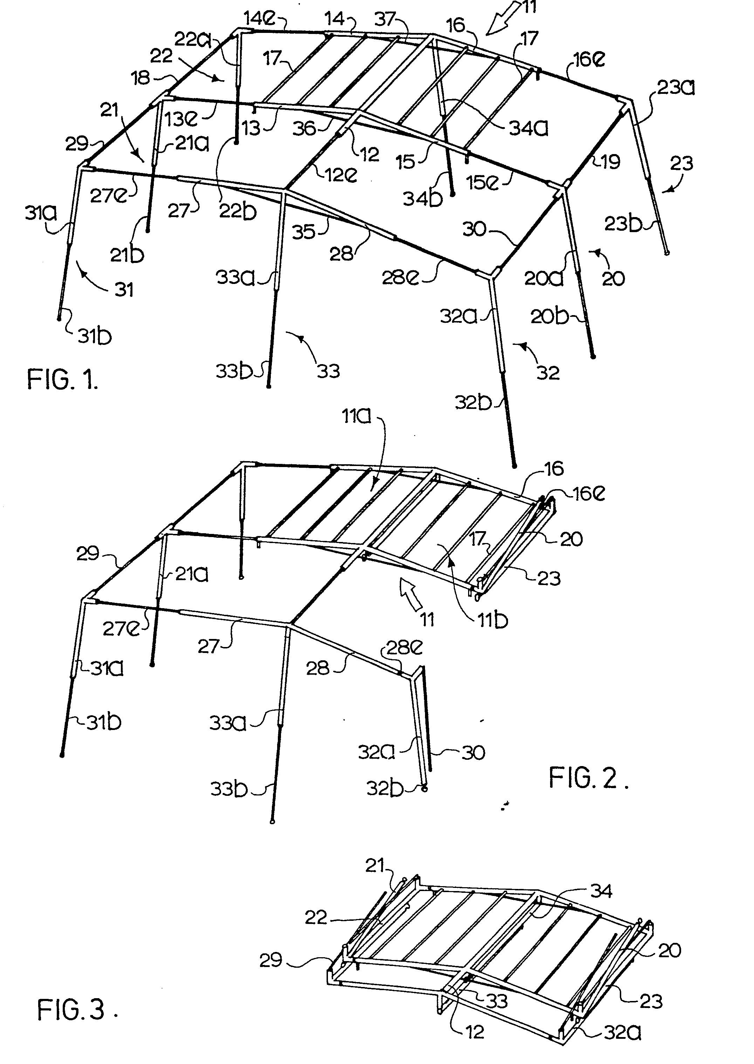

Referring now to the drawings, and particularly to Figures 1 to 3, the tent frame illustrated comprises a main panel, generally indicated 11 comprising a ridge pole 12 from which project two pairs of transverse struts 13, 14 and 15, 16 respectively. The struts 13, 14 are parallel to one another and extend in the same direction from the ridge pole 12 and the struts 15, 16 are parallel with one another and extend in the same direction as one another, opposite the direction of the struts 13, 14. The struts 13, 15 lie at an obtuse angle with respect to one another and the struts 14, 16 likewise extend at an obtuse angle. Spanning the main transverse struts 12-14, and extending parallel to the ridge pole 12 are a plurality of stringers 17 which are all identical to one another and all secured at their ends to an intermediate point along the associated main strut.

Telescopically housed within each of the main struts 13-16 is an associated strut extension 13e-16e respectively. The free ends of the strut extensions 13e, ·14e are joined by a further stringer 18, this being the "eaves" stringer referred to above. Similarly, between the free ends of the transverse strut extensions 15$\underline{e}$, 16$\underline{e}$ extends an eaves stringer 19.

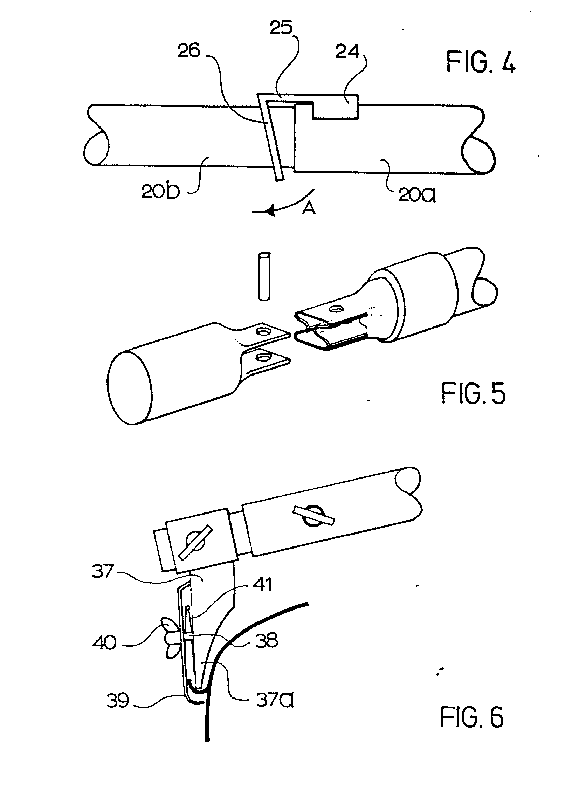

From the junction between each transverse strut extension 13$\underline{e}$-16$\underline{e}$ with the associated end of the respective eaves stringer 18, 19 there extends a leg 20, 21, 22, 23. Each of these legs is telescopic and comprises an outer element indicated by the subscript a and an inner, lower element indicated by the subscript b. The lower end of each outer element of each telescopic leg 20-23 is provided with a friction catch, illustrated in more detail in Figure 4, permitting each leg to be adjusted independently to a required length to accommodate uneven ground. In Figure 4 the friction catch associated with the leg 20 is illustrated; the friction catches of all telescopic members of the assembly may be identical with this, however, and the description of Figure 4 is intended to be by way of example only. Attached to the outer tube 20$\underline{a}$ \close to its open end where the inner tube 20$\underline{b}$ slides into it, is a mounting bracket 24 secured, for example by welding, to the tube 20$\underline{a}$. Projecting from the mounting bracket 24 is a resilient supp rt 25 which is secured to one peripheral point of a clamp ring 26 which surrounds the inner tube 20$\underline{b}$. The clamp ring 26 is held at an angle such that the transverse distance between the peripheral point at which the support 25 is connected and the diametrically opposite point of the ring is less than the outer diameter of the inner tube 20$\underline{b}$ when the support 25 is in its relaxed or natural state. When the tube 20$\underline{b}$ is to be introduced into the tube 20$\underline{a}$, therefore, the ring 26 has to be stressed, by a force applied in the direction of the arrow A of Figure 4, and consequently when the ring 26 is released the resilient support 25 causes it to engage the periphery of the tube 20b. Any attempt to insert the tube 20b further into the tube 20a will lead to the ring 26 being turned further in its direction of inclination, increasing the clamping effect. Adjustment of the relative positions of the tubes 20a and 20b can thus only be effected by applying a force to the ring 26 in the direction of the arrow A on the point diametrically opposite that at which it is supported on the resilient support 25. Extension of the tube 20b can, however, be effected without requiring manual intervention on the ring 26 since such movement will cause the ring 26 to move in the direction of the arrow A of Figure 4 thereby releasing the clamping effect automatically.

The ridge pole 12 terminates at the end of the junction of the two adjacent transverse struts 14, 16, but at the junction of the other pair of transverse struts 13, 15 the ridge pole 12 extends for a short distance and at this end receives a ridge pole extension 12e which is telescopically slidable within it. At the free end of the the ridge pole extension 12e there are two further transverse struts 27, 28 having corresponding further transverse strut extensions 27e, 28e at the free ends of which are pivotally mounted respective further eaves stringers 29, 30. The further eaves stringers 29, 30 are removably attached at their ends remote from the junction with the further transverse strut 27e, 28e at the junction of the transverse struts 13e with the leg 21 and the junction of the transverse strut extension 15e with the leg 20.

The junction between the further transverse struts 27e and the further eaves stringer 29 is also provided with a leg 31, again in the form of a telescopic assembly comprising an outer tube 31a and an inner, lower tube 31b. Correspondingly, the junction between the further transverse strut 28e and the further eaves stringer 30 is provided with a leg 32 which again is telescopic.

Additional support at the ridge is provided at each end by further supports, in the form of telescopic legs 33, 34, and the junctions of the pairs of transverse stringers across the ridge pole are reinforced by transverse straps 35, 36, 37.

Collapsing of the tent frame illustrated in Figure 1 is effected in the following manner, although the precise order in which the movement of the integers is described is not to be considered as limitative.

First, the eaves stringer 19 is released from its connection with the junction at the leg 20 and transverse strut extension 15e, and folded down, by means of a knuckle joint such as that illustrated in Figure 5, parallel with the leg 23. The knuckle joint is formed from flattened tube so that it can be housed within an open end of adjacent tube which thereby prevents pivoting. Pivotal movement is effected by withdrawing the knuckle joint from the adjecent open end of the tube thereby allowing it to turn about its pivot pin. As will be noted from Figure 1 all the junctions at the upper ends of the legs have short lengths of a larger diameter tube in which such knuckle joints can be housed to effect locking.

Once the eaves stringer 19 is folded parallel with the leg 23 the transverse strut extension 16e is telescopically collapsed into the transverse strut 16 and at the same time the leg 23 and eaves stringer 19 are rotated through 90° about a longitudinal axis of the transverse strut extension 16e so that they come to lie parallel with the adjacent stringer 17. The further eaves stringer 30 is then released from its connection with the junction between the leg 20 and the transverse strut extension 15e, and lowered to a position parallel with the leg 32. The leg 20 is then turned through an angle slightly in excess of 90° about the axis of the transverse strut extension 15e, and this strut extension is telescopically collapsed into the transverse strut 15 so that the leg 20 comes to rest, parallel with the stringer 17 and adjacent the leg 23 as illustrated in Figure 2. Finally, to reach the position illustrated in Figure 2, the transverse strut extension 28e is telescopically collapsed into the transverse strut 28 and the leg 34 at the end of the ridge pole 12 is pivoted up to lie parallel with the ridge pole 12 itself.

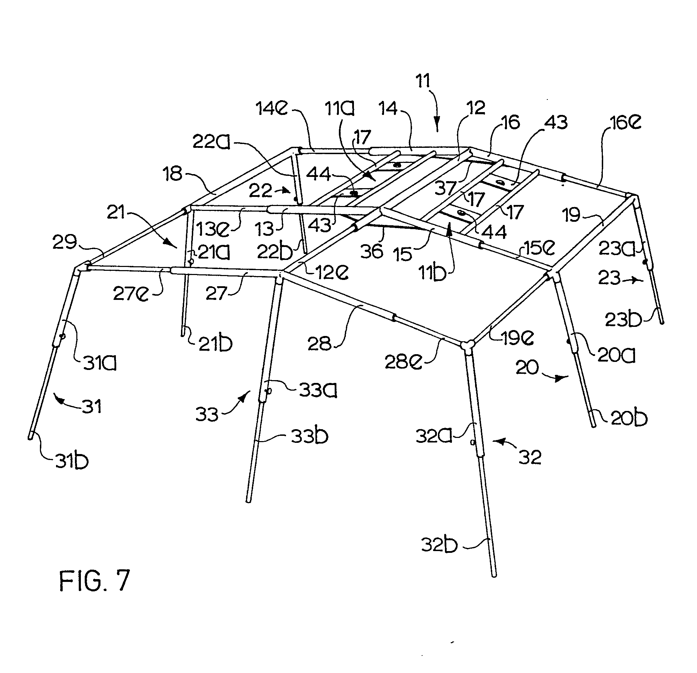

Collapsing of the legs and transverse struts on the other side of the main panel 11 is performed in the same way. However, before this is done the tent frame is mounted in position on the roof of a vehicle in the manner of a roof rack utilising the attachment clips illustrated in Figure 6. This attachmemt should, of course, be effected at an earlier stage than that illustrated in Figure 2, by first folding up the leg 34 at the end of the ridge pole 12 to allow a vehicle to be driven in under the erected tent frame and then by partial retraction of the legs 20, 21, 22, 23, 31, 32 to lower the central panel to bring it down to the level of the roof of the vehicle. To facilitate positioning the vehicle the leg 33 is also preferably preliminarily folded up parallel with the ridge pole extension 12e.

From the position illustrated in Figure 2, and assuming that the central panel 11 has now been attached to the roof of the vehicle, the remaining legs are folded in the manner described in relation to Figure 2. The legs 32 and 31 are then turned about the axes of the transverse strut extensions 27e, 28e to lie parallel to the ridge pole 12, and collapsing of the ridge pole extension 12e brings these legs finally to the position illustrated in Figure 3 where they lie alongside the legs 20, 23 and 21, 22.

The attachment clip illustrated in Figure 6 is similar to conventional attachment clips for roof racks in that it comprises a length of tube 37 securely attached to the transverse strut, or to the free end of the transverse strut extension (two different embodiments) and has a flattened end 37a shaped to be received in the gutter with which motor vehicle roofs are provided. A threaded shaft 38 is secured to the tube 37 and projects a hole (not shown) in a clamp member 39 having a hooked lower end which engages the undersurface of the gutter. A clamping screw 40 fits onto the end of the threaded shaft 38 and a hairpin type biasing spring 41 is located between the tubular member 37 and the clamp plate 39. The dimensions of the clip are such that upon unscrewing of the nut 40, which may be in the form of a wing nut, the spring clip 41 urges the clamp plate 39 out from under the gutter to allow rapid and easy removal of the roof rack from the roof of the vehicle. In place of the screw threaded connector 40 on the threaded shaft 38 an over-centre spring toggle arrangement may be empolyed instead to achieve an even more rapid and simple locking of the roof rack onto the roof of the vehicle.

Referring now to Figures 7 to 9, the second emdodiment of the invention is broadly similar to that illustrated in Figures 1 to 6, and corresponding components have been identified with the same reference numerals. The tent frame assembly comprises a fixed frame part generally indicated 11 comprising two sub-frame panels generally indicated 11a, 11b and each comprising parallel main support struts 13, 14 and 15, 16 interconnected by longitudinal stringers 17.

The two sub-frame panels 11a, 11b are joined by a ridge pole 12 which is common to both the sub-frames 11a, 11b.

Each of the main support struts 13, 14, 15, 16 of the fixed frame structure 11 has a telescopically extendable component indicated by the same reference numeral with a subscript $e$. The ridge pole 12 has, likewise, a telescopically extendable component 12e at the free end of which are located two secondary support struts 27, 28 which are inclined with respect to one another at an oblique angle corresponding to that between the two sub-frames 11a, 11b with respect to which latter the said secondary support struts 27, 28 are parallel; the secondary support struts 27, 28 have corresponding telescopically extendable components 27e 28e.

Extending parallel to the ridge pole 12 and joining the free ends of the telescopically extendable components 13e, 14e, 15e and 16e of the main support struts 13, 14, 15 and 16 are respective eaves poles 18, 19 which have respective telescopically extendable components 29, 30 which interconnect the free ends of the telescopic extensions 13e, 15e of the main support struts

- 11 -

13, 15 and the telescopic extensions 27e, 28e of the secondary support struts 27, 28 connected to the free end of the ridge pole extension 12e.

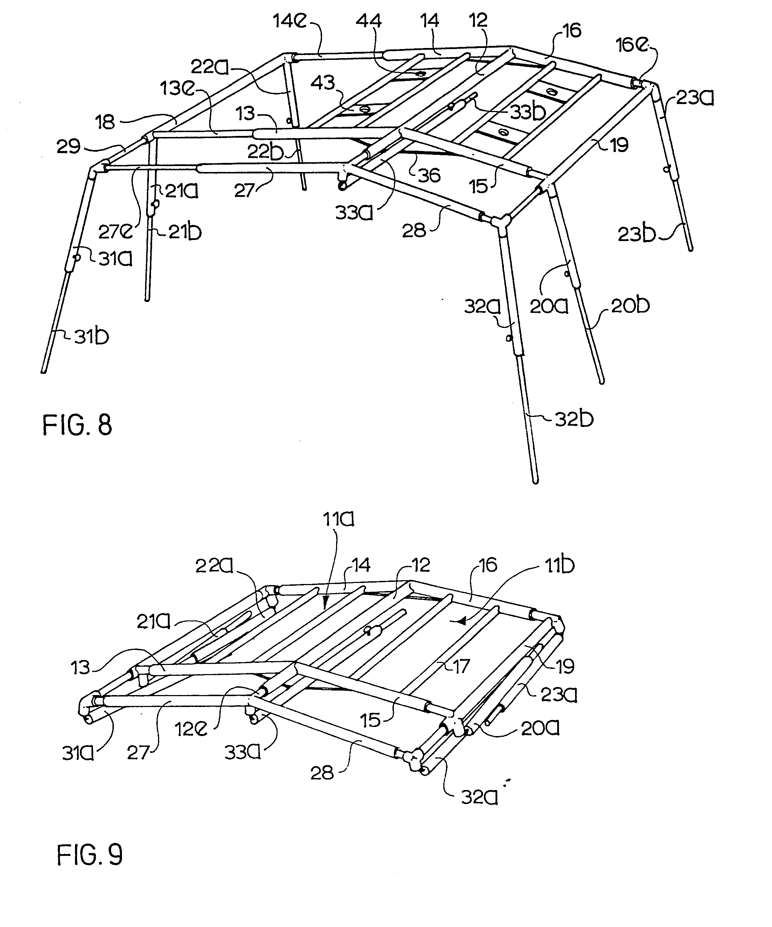

The structure thus described constitutes a telescopically collapsible roof frame structure for the tent frame assembly, which can be converted between the fully extended position illustrated in Figure 7 and the fully collapsed position illustrated in Figure 9. This can be effected either by sliding the telescopically extendable components of the support struts 13, 14 and 27 inwardly to carry the eaves poles 18, 29 of one side of the tent frame assembly towards the ridge pole 12 and ridge pole extension 12e (corresponding movement of the other side of the tent frame being effected to collapse that side also) and subsequently telescopically collapsing the ridge pole extension 12e and the two eaves pole extensions 29, 30 into their respective eaves poles 18, 19 or by performing such collapsing movements in the reverse order.

The telescopically collapsible roof frame assembly is supported on telescopically extendable legs 20, 21, 22, 23, 31, 32; 33, 34 like the embodiment of Figures 1 to 6, these legs being received in respective sockets formed as projecting elements extending from connecting couplings which are provided at the junction of each adjacent pair of elements around the periphery of the roof frame. Thus, as can be seen in Figure 7, the socket which receives the upper end of the corner leg 23 is formed as an extension from a coupling interconneciing the main strut extension 16e and the eaves pole 19. Similar fittings are provided for theother legs. As is known for conventional tent frames, the socket and associated leg may be interconnected by a spring or

0059604

- 12 -

other resiliently extendable member the ends of which are fixed one within the leg and the other within the socket. Extension of the spring or resilient member allows the leg to be withdrawn from the associated socket, but holds the two components together whilst allowing the leg to be folded up from its erected position as shown in Figure 7 to its collapsed position as shown in Figure 9.

All the telescopically extendable components of the tent frame can be locked in their extended positions by means of suitable screw clamps or other clamp means not shown in the Figures 7 to 9.

Spanning the longitudinal members 17 are four brackets 43 having suitable threaded openings 44 for receiving threaded connector bolts for connecting suitable legs (not shown) to the brackets 43 for supporting the fixed frame on the gutters of a motor vehicle roof. For this purpose the legs are provided with suitable gutter clips or clamps which may be of known construction similar to those provided for conventional roof racks.

The main support struts 14, 16 are spanned at their junction with the ridge pole 12 by a reinforcing brace 37 which, together with the main struts 14, 16 forms a triangle at the apex of the fixed frame assembly. A similar brace 35 is provided across the apex defined by the secondary support struts 27, 28 and a further brace 36, this time of cranked form is fitted across the struts 15, 13. The cranked form of the brace 36 is required in order to allow the leg 33 to pass between the brace itself and the ridge pole 12 when the frame assembly is collapsed thereby retaining this leg in position and holding it away from the roof of a vehicle on which the tent frame is mounted.

The tent cover, which is sup orted by the frame when the tent is erected, may be left tied to the fixed subframe panels 11a, 11b when the tent is to be collapsed. In this way the cover can be folded from the edges into a pack on the fixed frame. A flap of the cover may be provided to cover the folded cover, and possibly also an inner tent, to provide a waterproof protection for this latter on the roof rack constituted by the fixed frame.

Erection of the frame is simply a question of telescopically extending the roof frame in position on the car roof, fitting the legs into their associated sockets and partly extending them, disconnecting the gutter clips to release the fixed frame from the vehicle and then fully extending the legs. Finally the cover, which is already centralised in position, is unrolled and pegged out, although unrolling can be effected before the final extension of the legs. The motor vehicle can be left inside the tent to be unpacked in comfort if the weather is inclement, or can be driven out at any time after the gutter clips or clamps have been released. Because there are no loose poles to become lost, erection of the tent frame is much quicker and simpler than with conventional tents and even if the tent is used only infrequently there is no risk of forgetting which components fit together and in what order the erection of the tent frame has to take place.

- 14 -

CLAIMS

1.  A tent frame assembly of elongate frame elements interconnected in a way which permits the frame to be converted between an erected condition and a collapsed or dismantled condition, characterised in that the assembly comprises a fixed frame part (12, 13, 14, 15, 16, 17) and means (37, 39) for mounting the fixed frame part (12, 13, 14, 15, 16, 17) to the roof of a motor vehicle in the manner of a roof rack to provide support for the remaining frame elements of the assembly in its collapsed or dismantled condition.

2.  A tent frame assembly as claimed in Claim 1, characterised in that the fixed frame part (12, 13, 14, 15, 16, 17) includes a plurality of struts (12, 13, 14, 17; 12, 15, 16, 17) rigidly secured together to form two generally flat sub-frame panels (11a, 11b) inclined at a predetermined angle to one another.

3.  A tent frame assembly as claimed in Claim 2, characterised in that the said two sub-frame panels (11a, 11b) each incorporate a common longitudinal element (12) which constitutes the ridge pole in the erected tent frame.

4.  A tent frame assembly as claimed in any of Claims 1 to 3, characterised in that the whole of the roof of the tent frame assembly is formed as a telescopic struture which can be telescopically collapsed into the said fixed frame part (11) of the tent frame assembly.

5.  A tent frame assembly as claimed in Claim 4, characterised in that the legs (20, 21, 22, 23) of the tent frame assembly are telescopically extendable and permanently connected at their upper ends to telescopically extendable components (15e, 16e, 28e; 14e, 13e, 27e) of the roof frame by couplings which permit the legs (20, 21, 22, 23) to be folded into the general plane of the adjacent part of the roof frame when the tent frame assembly is collapsed.

6.    A tent frame assembly as claimed in Claim 2 or Claim 3, characterised in that the said sub-frame panels (11a, 11b) are provided with means (39, 41) for connecting the said fixed frame part (11) of the tent frame assembly to the roof of a motor vehicle, in the form of releasable clamps or clips attachable to the gutters of the motor vehicle roof.

7.    A tent frame assembly as claimed in Claim 6, characterised in that the said clamps or clips are mounted at the ends of respective legs (37) projecting from the outer ends of telescopic parts (15e, 16e; 13e, 14e) of transverse struts (13, 14, 15, 16) constituting part of each sub-frame panel (11a, 11b).

8.    A tent frame assembly as claimed in Claim 3 and Claim 6, characterised in that the sub-frame panels (11a, 11b) each comprise a pair of main struts (13, 14; 15, 16) extending transverse the said common longitudinal element and at least two longitudinal elements (17) spanning the said transverse main struts (13, 14, 15, 16), the said means for connecting the fixed frame part (11) of the tent frame assembly to the roof of a motor vehicle including brackets spanning the said longitudinal elements (17) and adjustable along the length thereof.

FIG. 1.

FIG. 2.

FIG. 3.

FIG. 4

FIG.5

FIG. 6

0059604

3/4

FIG. 7

0059604

4/4

FIG. 8

FIG. 9

## DOCUMENTS CONSIDERED TO BE RELEVANT

| Category | Citation of document with indication, where appropriate, of relevant passages | Relevant to claim |
|---|---|---|
| X | DE - B - 1 655 707 (WEINER)<br><br>* page 7, lines 10-18; page 8, lines 1-24; page 9, lines 1-20; figures 1-6 *<br><br>-- | 1,2,3,<br>4,5,6,<br>8 |
| X | CH - A - 394 522 (FRÖHLICH)<br><br>* page 2, lines 13-120; page 3, lines 1-35; figures 1-11 *<br><br>-- | 1,2,3,<br>4,5,6 |
| X | CA - A - 994 512 (GREENHALGH)<br><br>* page 3, lines 106-126; page 4, lines 127-160; figures 1-14 *<br><br>-- | 1,2,3,<br>4,5,6 |
| A | GB - A - 767 904 (WENINGER) | |
| A | FR - A - 1 166 686 (VANHOUCKE) | |
| A | DE - B - 1 145 037 (SCHMID) | |
| A | GB - A - 1 030 198 (ANGELIS) | |

------------

**CLASSIFICATION OF THE APPLICATION (Int. Cl. 3)**

A 45 F 1/06
B 60 P 3/34

**TECHNICAL FIELDS SEARCHED (Int.Cl. 3)**

A 45 F
B 60 P

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search The Hague | Date of completion of the search 04-06-1982 | Examiner SCHOLS |
|---|---|---|

EPO Form 1503.1  06.78